# EUROPÄISCHE PATENTSCHRIFT

(11) **EP 2 535 253 B1**
(45) Veröffentlichungstag und Bekanntmachung des Hinweises auf die Patenterteilung: **04.05.2016**
(21) Anmeldenummer: 11170403.7
(22) Anmeldetag: 17.06.2011
(51) Int. Cl.: B62M 3/08

(54) **Dreidimensional bewegliches Pedal**
Pedal which can be moved in three dimensions
Pédale mobile en trois dimensions

(43) Veröffentlichungstag der Anmeldung: 19.12.2012
(73) Patentinhaber: BioConform GmbH, 07749 Jena (DE)
(72) Erfinder: Töpfer, Jörg, 07749 Jena (DE)
(74) Vertreter: Hasler, Erich

(56) Entgegenhaltungen:
- EP-A1- 1 761 428
- WO-A1-2009/128702
- WO-A2-2011/136502
- DE-A1- 3 218 290
- DE-A1-102009 024 749
- JP-U- S5 576 790
- US-A- 4 338 829

## Beschreibung

### Technisches Gebiet

Die Erfindung betrifft ein Pedal mit einer beweglichen Fussauflage, insbesondere für Fahrräder und Trainingsgerät mit ähnlichen Bewegungsmustern.

### Stand der Technik

Ein naturgemäßes, freies Zusammenspiel aller beim Fahrradfahren beteiligten Bewegungen in den Beingelenken, das gleichzeitig um mehrere bewegliche Achsen und somit in mindestens 3 Ebenen kombiniert erfolgt, ist aus dem Stand der Technik nicht bekannt.

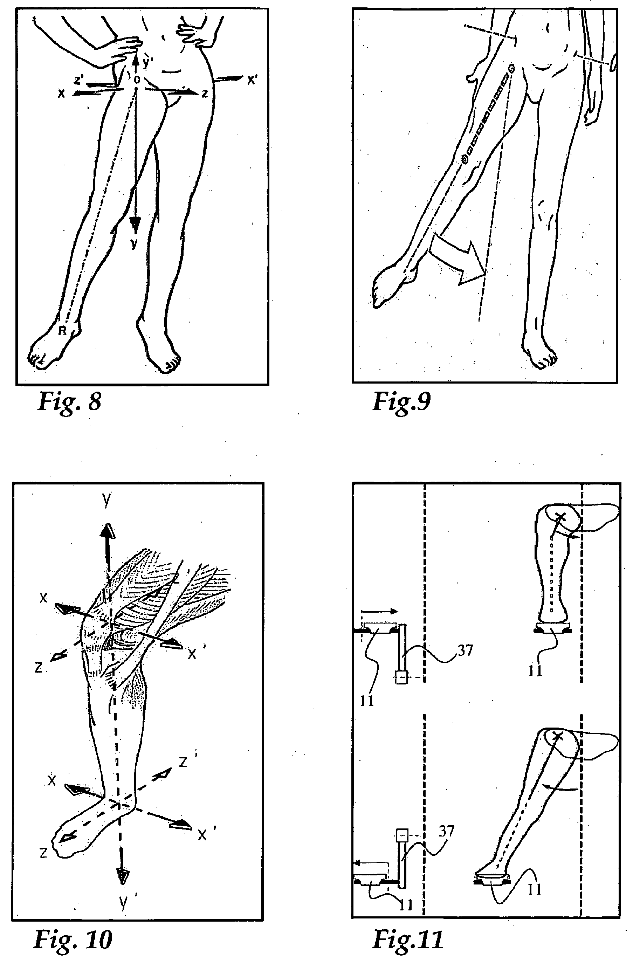

Bisherige Pedalkonstruktionen erlauben zwar gekoppelte, bzw. kombinierte Bewegungen der Gelenke in Hüfte, Knie und Fuß im aktiv ungeführten oder passiv geführten Modus. Es sind jedoch keine Pedalkonstruktionen bekannt, die alle der folgenden Bewegungen allein und /oder in Kombination ermöglichen. (zu deren besseren Illustration wird Bezug auf die Fig.8 bis 10 genommen):
a) Beuge-Streck-Bewegungen des Beines (Flexion/Extension), d.h. eine Bewegung um eine frontale Achse xx' bzw. eine Bewegung in einer fronto-transversalen Ebene (entspricht einer Sagittalebene). → siehe Fig. 8/10
b) Einwärts-Auswärts-Drehbewegungen des Beines (Innen- /Aussenrotation), d.h. eine Bewegung um eine vertikale Achse yy' bzw. eine Bewegung in einer sagittofrontalen Ebene (entspricht der Transversalebene). → siehe Fig. 8/10
c) An- und Abspreizen des Beines (Adduktion / Abduktion), d.h. eine Bewegung um eine sagittale Achse zz' bzw. eine Bewegung in einer sagitto-transversalen Ebene (entspricht einer Frontalebene). → siehe Fig.9

Es sind z.B. eine Bewegungskopplung, bzw. Kombination der Bewegungen a) und
b) beschrieben worden (vgl. weiter unten). Der biomechanisch nötige Bewegungsfreiraum des Beines bzw. der Beinachse, der zusätzlich die Bewegung
c) zulässt, wird aber bei solchen Pedalen nicht eingeräumt. Die Bewegung der Längsachse des Beines bleibt so auf eine einzige sagittale Ebene beschränkt.
Dieser unvollständig freie Bewegungsraum hat erhebliche Nutzer-Nachteile.

Zudem erlauben frei bewegliche, d.h. nicht-zwangsgeführte Pedale nach dem Stand der Technik keine die Bewegungsausführung stabilisierende Dämpfung durch konstruktive oder auf Bauteilen basierende Lösungen.

Aus der DE 3 218 290 ist ein Pedaltrainingsgerät bekannt, welches zusätzlich zur Drehbewegung der Pedale eine Pedalbewegung um eine weitere Achse erlaubt, die senkrecht zur Pedalachse des am Ende eines Kurbelarmes sitzenden Pedals verläuft. Dadurch wird eine freie Schwenkbewegung des Fußes in einem Winkel zur Längserstreckung der Pedale ermöglicht. Das Pedaltrainingsgerät ist in seiner Konstruktion einfach gehalten, ein Drehpunkt des Pedals unterhalb des Fussballens eines Benutzers und die daraus resultierende Drehbewegung des Vorderfußes um eine Kugel, bei der die Ferse hin und her schwingt während der Fussballen in konstantem Abstand zum Tretkurbelarm verbleibt, wie er beim genannten Trainingsgerät vorgesehen ist, muss aus biomechanischer Sicht allerdings als belastend für das Kniegelenk und die Sprunggelenke betrachtet werden. Ein ähnliches Konzept (in modernerer Ausführung) wird auch in der WO 2007/009258 A1 gelehrt. Eine um die Pedalachse rotierbare Basis trägt dort ein Kugelgelenk und darauf eine Fussauflage. Dadurch wird eine Dreh- bzw. Schwenkbewegung des Fusses ermöglicht. Auch das in der FR 2661651 beschriebene Pedal lässt eine geringfügige Drehung und zusätzlich eine Verkippung in der Ebene der Fussauflage zu, wobei dies durch ein spezielles Kugellager bewerkstelligt wird. Allerdings führen auch die Anordnungen der Dreh- bzw. Kugellager im Fussballenbereich bei WO 2007/009258 A1 und FR 2661651 zu einem - biomechanisch nachteiligen - Schwingen der Ferse.

Die EP 1 761 428 offenbart eine funktionelle Tretmechanik, gemäss dem Oberbegriffe des Anspruchs 1, bei welcher die Schuhauflage auf einem Support derart beweglich angeordnet ist, dass eine Schwenkbewegung in einem Winkel zur Längsachse der Schuhauftrittsfläche bzw. zur Fahrtrichtung ermöglicht ist. Biomechanisch vorteilhafter als beim Pedaltrainingsgerät aus der DE 3 218 290 schwingt hierbei der Vorfuss um einen Drehpunkt in der Ferse. Gemäss einer Ausführungsvariante ist ein Kegelstumpf mit einer kurvenförmigen Nut in seiner Manteloberfläche an der Pedalachse drehfest angeordnet. In diese Nut greift ein Bolzen ein, welcher starr mit der Schuhauftrittsfläche verbunden ist. Diese Konstruktion sorgt dafür, dass die Schuhauftrittsfläche des Pedals in der von Ihr aufgespannten Ebene eine zwangsgeführte Schwenkbewegung und zusätzlich eine zwangsgeführte Kippbewegung aus der Ebene der Schwenkbewegung heraus vollführt. Die Schuhauflage erstreckt sich über die ganze Länge des Fusses. Im Fersenbereich der Schuhauftrittsfläche befindet sich ein Drehpunkt, der den Ballenbereich der Schuhauftrittsfläche in seiner Schwenkbewegung führt. Die erwähnte Tretmechanik ist recht sperrig und aufwändig in der Konstruktion. Auch treten im Betrieb relativ hohe Reibe- und Gleitverluste auf. Bei der beschriebenen Ausführungsvariante ist es zudem nicht möglich, die Schuhauftrittsfläche auf den Fussballenbereich zu beschränken.

Analog zur beschriebenen Tretmechanik aus der EP 1761428 werden in der WO 2008/086405 A2 und der WO 96/00679 Pedale offenbart, bei denen die Pedalachse mit einer Nut versehen ist, in welche ein Bolzen eingreift. Der Bolzen ist Teil einer Fussauflage, welche durch das beschriebene Zusammenwirken von Nut und Bolzen in zwangsgeführter Bewegung entlang der Pedalachse hin und her bewegt wird. Das erzielte - 2 dimensional isolierte - Bewegungsmuster ist jedoch unnatürlich und damit belastend für die Beine, da keine Schwenkbewegung bzw. kein Einwärts- und Auswärtsdrehen des Fusses möglich ist.

Das in der DE 10 2009 024 749 A1 offenbarte Pedal ruht in der Art eines Schlittens auf zwei konzentrischen, kreisbogenabschnittförmigen Lagern. Auch dieses Pedal stellt eine recht aufwändige Konstruktion dar, die sich nur schwerlich gewichtssparend verwirklichen lässt. Ausserdem begünstigt die Konstruktion eine Verschmutzung.

Biomechanisch nachteilig an allen bisher aufgeführten Lösungen ist, wie oben beschrieben, dass freie Bewegungen des Beines respektive des Fußes in der Frontalebene in Kombination mit Bewegungen in der Sagittal- sowie der Transversalebene nicht möglich sind. Gemäss Stand der Technik ist insbesondere in Kombination mit den anderen beschriebenen Bewegungen keine Abduktion und Adduktion sowohl des Oberschenkels bzw. des Ober- und Unterschenkels relativ zum Becken, als auch des Unterschenkels relativ zum Oberschenkel ermöglicht.

### Aufgabe der Erfindung

Eine Aufgabe der vorliegenden Erfindung besteht darin, ein Pedal bereitzustellen, welches die eingangs erwähnten Nachteile nicht aufweist. Insbesondere ist es ein Ziel, ein Pedal vorzuschlagen, welches ein freies Zusammenspiel aller beim Fahrradfahren beteiligten Bewegungen in den Beingelenken in mindestens 3 Ebenen zulässt und in der Folge biomechanisch effizienter als bekannte Lösungen ist. Zudem wird angestrebt, das Pedal konstruktiv einfacher und damit preiswerter zu gestalten. Die Einfachheit soll darüber hinaus ein geringes Gewicht des Pedals begünstigen.

Eine ebenfalls beschriebene bevorzugte Ausgestaltungsform des erfindungsgemässen Pedals soll es erlauben, bei freier, d.h. nicht-zwangsgeführter Beweglichkeit eine die Bewegungsausführung stabilisierende Dämpfung zu gewährleisten.

Weitere Vorteile und Ziele der vorliegenden Erfindung ergeben sich aus der nachfolgenden Beschreibung.

### Darstellung der Erfindung

Die oben genannte Aufgabe wird erfindungsgemäss gelöst durch ein Pedal nach Anspruch 1.

Insbesondere handelt es sich dabei um ein Pedal mit einer ersten Drehachse (vorzugsweise definiert durch die Pedalachse), einer Basis und einer Fussauflage. Die Basis ist entlang der ersten Drehachse verschiebbar bzw. bewegbar und wobei weiter bevorzugt die Fussauflage um eine zweite Drehachse drehbar mit der Basis verbunden ist. Die zweite Drehachse ist dabei quer zur ersten Drehachse angeordnet. Ausserdem ist die zweite Drehachse zusammen mit der Basis entlang der ersten Drehachse vorschiebbar bzw. bewegbar.

Nachfolgend werden Ausgestaltungsformen des erfindungsgemässen Pedals beschrieben, wobei die genannten bevorzugten Merkmale - soweit sie sich nicht ausschliessen - in beliebiger Kombination verwirklicht sein können.

Begriffe in diesem Dokument sollen bevorzugt so verstanden werden, wie sie ein Fachmann auf dem Gebiet verstehen würde. Es sei auf die massgeblichen Definitionen gemäß medizinischer Nomenklatur verwiesen. Insbesondere für den Fall, dass Unklarheiten bestehen sollten, können die in diesem Dokument aufgeführten bevorzugten Definitionen (alternativ oder ergänzend) herangezogen werden.

Bevorzugt beziehen sich Angaben in diesem Dokument auf das Pedal wie es im Normalbetrieb vorläge, d.h. während ein Fuss auf der Fussauflage ruht und/oder das Pedal durch die Beine bzw. Füsse eines Benutzers bewegt wird.

Gemäss einer bevorzugten Ausgestaltungsvariante ist die Fussauflage um eine dritte Drehachse drehbar mit der Basis verbunden. Auch die dritte Drehachse ist vorzugsweise zusammen mit der Basis entlang der Pedalachse verschiebbar bzw. bewegbar.

Die erste Drehachse ist bevorzugt durch die bzw. eine drehbare Verbindung des Pedals zum Tretkurbelarm definiert. Die Verbindung zwischen Pedal und Tretkurbelarm wird durch ein Pedalteil bzw. ein Gelenk hergestellt, welches eine Drehung um die erste Drehachse erlaubt. Dabei handelt es sich vorzugsweise um eine physische Pedalachse. Es sei bei Erwähnung der ersten Drehachse jeweils alternativ auch das genannte Pedalteil bzw. Gelenk, also insbesondere eine physische Pedalachse offenbart, soweit dies im jeweiligen Kontext sinnvoll ist. Entsprechend sei bei Erwähnung einer zweiten bzw. dritten Drehachse jeweils alternativ auch ein Pedalteil bzw. Gelenk offenbart, welches eine Drehung um die zweite bzw. dritte Drehachse erlaubt (soweit dies im jeweiligen Kontext sinnvoll ist) bzw. ein Pedalteil/Gelenk, das die entsprechende Drehachse definiert. Wenn im Folgenden also beispielsweise von der Verbindung zu einer Drehachse (respektive die Verbindung über eine Drehachse) gesprochen wird, so soll darunter vorzugsweise die Verbindung zu demjenigen Pedalteil (respektive die Verbindung über denjenigen Pedalteil) verstanden werden, der die Drehung um die genannte Drehachse ermöglicht oder die genannte Drehachse definiert (z.B. Gelenk).

In diesem Sinne stellt die Basis zweckmässigerweise die Verbindung zwischen der Fussauflage und der ersten Drehachse dar. Die Fussauflage und die Basis sind mit Vorteil über die zweite und/oder dritte Drehachse (vgl. unten) verbunden.

Die zweite Drehachse ist vorzugsweise durch eine drehbare Verbindung der Fussauflage zur Basis definiert. Die Verbindung zwischen Fussauflage und Basis wird mit Vorteil durch ein Gelenk hergestellt, welches eine Drehung um die zweite Drehachse erlaubt.

Die dritte Drehachse ist vorzugsweise durch eine drehbare Verbindung der Fussauflage zur Basis definiert. Die Verbindung zwischen Fussauflage und Basis wird mit Vorteil durch ein Gelenk hergestellt, welches eine Drehung um die dritte Drehachse erlaubt.

Wenn von der Ausrichtung (z.B. "rechtwinklig", "quer") einer ersten und einer zweiten, sich nicht schneidender Geraden (z.B. erste und zweite Drehachse) die Rede ist, so soll darunter vorzugsweise die Ausrichtung der ersten Geraden relativ zur Parallelprojektion der zweiten Geraden auf die erste Gerade gemeint sein, und zwar mit Vorteil die Projektion parallel zur kürzesten Verbindungstrecke zwischen den zwei Geraden.

Die zweite Drehachse ist zweckmässigerweise quer (vorzugsweise im Wesentlichen rechtwinklig) zur ersten Drehachse angeordnet bzw. ausgerichtet. Mit Vorteil ist sie quer (vorzugsweise im Wesentlichen rechtwinklig) zur durch die Fussauflage definierten Ebene ausgerichtet. Sie kann jedoch auch in einem Winkel von 0 bis 30, insbesondere 0 bis 10 Grad zur genannten Ebene ausgerichtet sein.

Die dritte Drehachse ist mit Vorteil quer (vorzugsweise im Wesentlichen rechtwinklig) zur ersten Drehachse und quer (vorzugsweise im Wesentlichen rechtwinklig) zur zweiten Drehachse angeordnet bzw. ausgerichtet.

Abweichungen von 0 bis 30 Grad, vorzugsweise von 0 bis 10 Grad von einer rechtwinkligen Stellung können jeweils vorgesehen sein. Alternativ könnte man auch sagen, dass die dritte Drehachse mit Vorteil (im Wesentlichen) in Fahrtrichtung oder in Fusslätigsrichtung eines auf dem Pedal aufliegenden Fusses ausgerichtet ist.

Mit der Verschiebung bzw. Bewegung der Basis entlang der ersten Drehachse ist vorzugsweise gemeint, dass die Basis in eine erste Verschiebungsrichtung und in eine der ersten Verschiebungsrichtung entgegengesetzte zweite Verschiebungsrichtung verschiebbar ist. Bei Verbindung des Pedals mit einem Tretkurbelarm entspricht die erste Verschiebungsrichtung z.B. einer Richtung hin zum Tretkurbelarm oder hin zu einem ersten Ende der ersten Drehachse und die zweite Verschiebungsrichtung entspricht einer Richtung vom Tretkurbelarm weg oder hin zum zweiten Ende der ersten Drehachse. Zweckmässigerweise erfolgt die beschriebene Verschiebung in gerader Linie.

Gemäß einer bevorzugten Ausgestaltungsform ist die Basis parallel oder im Wesentlichen parallel zur ersten Drehachse verschiebbar. Dies ist konstruktiv sehr einfach zu bewerkstelligen. Beispielsweise kann die Basis die (physische) Pedalachse umgreifen und/ oder eine Aufnahme für die Pedalachse bilden. Auf diese Weise kann die Pedalachse selbst die Führung für die Basis bilden. Alternativ oder zusätzlich dazu können parallel oder im Wesentlichen parallel zur ersten Drehachse eine, zwei oder mehr Führungsschienen vorgesehen sein, die mit der Basis zusammenwirken.

Wenn von einer "freien Bewegung" (z.B. "frei drehbar", "frei verschiebbar", "freies Zusammenspiel" etc.) die Rede ist, so soll darunter bevorzugt zu verstehen sein, dass die in Frage stehende Bewegung isoliert von einer spezifischen anderen Bewegung oder isoliert von allen anderen Bewegungen ausführbar ist oder dass die Bewegung nicht durch eine spezifische andere oder irgendeine andere Bewegung bedingt ist. Unter einer "freien Bewegung" kann alternativ auch eine nicht-zwangsgeführte Bewegung zu verstehen sein.

Die Basis ist mit Vorteil (insbesondere relativ zum Tretkurbelarm) um die erste Drehachse drehbar, vorzugsweise frei drehbar. Dadurch wird eine verbesserte Flexion/Extension ermöglicht. Dies im Gegensatz zu einer Konstruktion bei der die Lage der Basis an die Stellung bzw. Bewegung des Tretkurbelarms gekoppelt ist.

Nach einer besonders vorteilhaften Ausgestaltungsvariante erlaubt die Konstruktion des Pedals ein freies Zusammenspiel zwischen der Verschiebung der Basis entlang der ersten Drehachse und der Drehung der Fussauflage um die zweite und/ oder dritte Drehachse, bevorzugt auch in Kombination mit einer Drehung um die erste Drehachse. Mit anderen Worten ist das Pedal so ausgebildet, dass dieses freie Zusammenspiel ermöglicht ist.

Es ist von Vorteil, wenn die Verschiebung der Basis entlang der ersten Drehachse frei ist. Mit Vorteil ist die Verschiebung insbesondere nicht an die Bewegung des (mit der ersten Drehachse verbundenen) Tretkurbelarms und/ oder an die Drehung der Fussauflage um die zweite und/ oder dritte Drehachse gekoppelt oder durch diese bedingt.

Weiterhin ist es zweckmässig, wenn die Drehung der Fussauflage um die zweite und/ oder dritte Drehachse frei ist. Mit Vorteil ist die Drehung insbesondere nicht an die Bewegung des (mit der ersten Drehachse verbundenen) Tretkurbelarms und/oder die Verschiebung der Basis entlang der ersten Drehachse gekoppelt oder durch diese bedingt.

Die zusätzlichen Freiheitsgrade, welche sich dadurch für den Fuss respektive das Bein ergeben, gelten als physiologisch und sind daher biomechanisch sehr vorteilhaft.

Durch die Verschiebbarkeit der Basis entlang der ersten Drehachse und die Drehbarkeit der Fussauflage um die zweite Drehachse kann neben der Beugung und Streckung (Extension/Flexion) des Beins in Hüfte, Knie und Fuß auch eine Einwärts-Auswärts-Drehbewegungen des Beines in Hüfte, Knie und Fuß (Innen-/ Aussenrotation) sowie ein An- und Abspreizen des Beines insbesondere in Hüfte und Knie (Adduktion / Abduktion) stattfinden. Letzteres wird durch die sagittalen Achsen zz' (vgl. Fig.8 und 10) in Hüfte und Knie nach dem aktuellen biomechanischen Wissensstand verlangt. Wenn zusätzlich eine beschriebene dritte Drehachse vorgesehen ist, kann darüber hinaus eine Neigung des Fusses nach innen bzw. aussen, d.h. ein wechselseitiges Auf- und Abkanten des inneren bzw. äusseren Fussrandes erfolgen (Supination/Pronation).

Eine besonders einfache, kompakte Konstruktion des erfindungsgemässen Pedals wird dadurch möglich, dass die Fussauflage um die zweite Drehachse (vorzugsweise frei) drehbar mit der Basis verbunden und die zweite Drehachse zusammen mit der Basis (vorzugsweise frei) entlang der ersten Drehachse verschiebbar ist. Die Fussauflage kann so auf den Ballenbereich des Fusses beschränkt bleiben und muss sich nicht bis zur Ferse erstrecken. Dennoch ist durch diese Konstruktion eine Schwenkbewegung mit einem virtuellen Drehpunkt im Fersenbereich ermöglicht.
Das ist bewegungstechnisch sehr vorteilhaft, da die virtuelle Drehachse, welche den virtuellen Drehpunkt im Fersenbereich definiert, funktionell anatomisch der Unterschenkelachse yy' (vgl. Fig.8 und 10) entspricht. Die virtuelle Drehachse ist aber nicht notwendigerweise (relativ zur ersten Drehachse) feststehend, wie dies aus dem Stand der Technik bekannt ist. Mit anderen Worten ist der virtuelle Drehpunkt bzw. die virtuelle Drehachse nicht immer in einer Ebene angeordnet, die parallel zur durch die Bewegung (Kreisbahn) des Tretkurbelarms definierten Ebene ausgerichtet ist. Es ist von Vorteil, wenn der virtuelle Drehpunkt bzw. die virtuelle Drehachse diese Ebene beliebig verlassen und sich frei z.B. in anderen sagittalen Ebenen respektive frontalen Ebenen bewegen kann. Der virtuelle Drehpunkt kann somit seine Entfernung von der durch den Tretkurbelarm definierten Ebene verändern. Eine Abduktion/ Adduktion insbesondere in der Hüfte und im Knie wird so erstmals möglich. Weiterhin kann das Bein respektive der Fuss eine freie Extension/Flexion und eine freie Innen- und Außenrotation mit freier Abduktion/ Adduktion auch kombiniert ausführen. Damit kann das Bein bzw. der Fuss noch besser seine natürlichen Bewegungsmuster ausführen, wie sie physiologisch z.B. bei zyklischen Beuge-Streck-Bewegungen analog dem Fahrradfahren erfolgen.

Es ist von Vorteil, wenn die Basis um mindestens 2,3 oder 5 cm und/ oder höchstens 25,15 oder 10 cm entlang der ersten Drehachse verschiebbar ist.

Wünschenswert ist es zudem, wenn die Fussauflage mindestens um einen Winkel von 5,10 oder 15 Grad und/oder um höchstens 60,45 oder 30 Grad um die zweite Drehachse drehbar ist.

Weiterhin ist es von Vorteil, wenn die Fussauflage mindestens um einen Winkel von 2,5 oder 10 Grad und/oder um höchstens 40,30 oder 20 Grad um die dritte Drehachse drehbar ist.

Zweckmäßigerweise können Anschläge vorgesehen sein, welche die Bewegung (Verschiebung bzw. Drehung) in die beiden Bewegungsrichtungen begrenzen (und damit bspw. den maximalen Drehwinkel definieren). Mit Vorteil ist die Verschiebung der Basis in beide Verschiebungsrichtungen durch einen Anschlag begrenzt. Die Drehung um die zweite und/oder dritte Drehachse ist vorzugsweise in beide Drehrichtungen durch einen Anschlag begrenzt.

Die erste Drehachse ist zweckmässigerweise im Bereich des Fussballens bzw. unterhalb des Fussballens eines auf der Fussauflage ruhenden Fusses, insbesondere im Bereich des Fussballens des Grosszehs angeordnet.

Die zweite Drehachse ist mit Vorteil in Fahrtrichtung vor oder hinter der ersten Drehachse angeordnet, wobei Letzteres bevorzugt ist. Dadurch wird eine kompakte Konstruktion und über eine optimale Positionierung des Fußes eine optimale Kraftübertragung auf das Pedal ermöglicht. Die Fussauflage kann sich von der zweiten Drehachse über die erste Drehachse erstrecken.

Nach einer bevorzugten Ausgestaltungsvariante verläuft die zweite Drehachse durch die Fussauflage und/ oder durch die Basis. Es ist jedoch zweckmässig, wenn die oben genannte virtuelle Drehachse im Fersenbereich oder die Mehrzahl der möglichen virtuellen Drehachsen nicht durch die Fussauflage und/oder durch die Basis verlaufen. Es ist nämlich ein Ziel, trotz kompakter Bauform einen virtuellen Drehpunkt der Fussauflage respektive des Fusses im Fersenbereich zu schaffen.

Es ist wünschenswert, dass die Fussauflage einen Befestigungsmechanismus zur Befestigung eines Schuhs aufweist. Dieser Befestigungsmechanismus oder ein Teil davon ist mit Vorteil entlang (insbesondere parallel zur) ersten Drehachse und/oder in Fahrtrichtung bzw. in Fusslängsrichtung eines auf dem Pedal aufliegenden Fusses verstellbar oder bewegbar, wobei eine Verstellbarkeit bzw. Bewegbarkeit relativ zur Fussauflage gemeint ist. Dadurch lässt sich eine bewegungs- und leistungsbedarfsgerechte Fussposition einrichten.

Weiterhin ist es von Vorteil, wenn die Bewegung bzw. Verschiebung der Basis entlang der ersten Drehachse in eine oder beide (d.h. die erste und die zweite) Verschiebungsrichtungen gefedert und/oder gedämpft ist. Besonders bevorzugt ist die Bewegung beidseitig, d.h. in beide Verschiebungsrichtungen gefedert und/oder gedämpft. Die Federung kann durch ein, zwei oder mehr Federelemente, die Dämpfung durch ein, zwei oder mehr Dämpfungselemente erreicht werden. Wenn zu diesem Zweck nur ein Federelement und/oder ein Dämpfungselement vorgesehen sind, so bewirkt dieses vorzugsweise in beide Verschiebungsrichtungen eine Federung und/oder Dämpfung. Nach einer alternativen Definition ist das Pedal so ausgebildet, dass die Bewegungsenergie in eine Verschiebungsrichtung ganz oder teilweise durch ein Element (z.B. Tonnenfeder oder Spiralfeder) aufgenommen werden kann, wobei die Bewegungsenergie durch das Element gegebenenfalls wieder in Form von Bewegungsenergie in die andere Verschiebungsrichtung abgegeben und so eine Rückstellwirkung erzielt werden kann. Zweckmässigerweise kann das Feder- oder Dämpfungselement in zwei einander entgegengesetzte Verschiebungsrichtungen (z.B. auf Zug und auf Druck) beanspruchbar sein, d.h. seine Feder- oder Dämpfungswirkung entfalten.

Auch die Drehung der Fussauflage um die zweite und/ oder dritte Drehachse ist mit Vorteil in eine oder beide Drehrichtungen gefedert und/ oder gedämpft. Das oben in Bezug auf die Verschiebung entlang der ersten Drehachse Gesagte trifft - soweit anwendbar - mit Vorteil auch auf die Drehung um die zweite und/ oder dritte Drehachse zu, wobei die Begriffe "Verschiebung", durch "Drehung" und "Verschiebungsrichtung" durch "Drehrichtung" zu ersetzen sind.

Das Pedal kann auch so ausgestaltet sein, dass die erwähnte Dämpfung während der Verschiebung entlang der ersten Drehachse durch Arbeit bzw. eine Bewegung gegen die Schwerkraft erfolgt. Es besteht z.B. die Möglichkeit, das Pedal so auszugestalten, dass eine Aufwärtsbewegung und eine Abwärtsbewegung der Fussauflage relativ zur ersten Drehachse ermöglicht sind. Die Bewegung folgt dabei mit Vorteil einer einfach gekrümmten Kurve, die in einer entlang der ersten Drehachse verlaufenden Ebene liegt. Die Enden der Kurve sind nach oben gerichtet. Diese Ausführung hat eine funktionelle Dämpfung und damit eine Stabilisierung der Fussbewegung zur Folge, die das Resultat einer Bewegung bzw. von Arbeit gegen die Schwerkraft ist.

Für die Verschiebung der Basis entlang der ersten Drehachse sind die oben genannten Feder- bzw. Dämpfungselemente vorzugsweise (etwa) in der Mitte der Basis oder beidseitig der Basis im Bereich der ersten Drehachse angeordnet. Bei dem oder den Federelementen handelt es sich vorzugsweise um Tonnenfedern.

Nach einer besonders bevorzugten Ausgestaltungsvariante werden die Federung und/oder die Dämpfung der oben beschriebenen Bewegungen (Verschiebung entlang der ersten Drehachse und/ oder Drehung um die zweite und/ oder dritte Drehachse) durch elastisch verformbare Elemente, insbesondere aus Polymer (vorzugsweise Kautschuk) oder Kunststoff oder durch gummielastische Elemente erreicht. Es kann auch bevorzugt sein, wenn die Elemente auf 95, 90, 80 oder 60 Prozent ihres Volumens komprimierbar sind und zwar durch die "normalen", während des Fahrens auf das Pedal wirkenden Kräfte. Sie können zu diesem Zweck beispielsweise eine Mehrzahl von Hohlräumen und/ oder eine Schwammstruktur aufweisen.

Es kann jedoch ganz allgemein, d.h. unabhängig von den beschriebenen Bewegungen, Gelenken etc. vorteilhaft sein, wenn das Pedal eines, zwei, drei, vier oder mehr der genannten elastisch verformbaren Elemente aufweist.

Solche elastisch verformbaren Elemente sollen es erlauben, bei freier, d.h. nicht-zwangsgeführter Beweglichkeit eine die Bewegungsausführung stabilisierende Dämpfung zu gewährleisten. Die größeren Bewegungsfreiräume sollen nach dieser bevorzugten Ausgestaltungsvariante nicht allein durch übliche Achslager, sondern durch die Verwendung der genannten elastischen Elemente, allein oder in Kombination mit üblichen Lagern, realisiert werden.

Eine besonders bevorzugte Ausgestaltungsvariante des erfindungsgemässen Pedals zeichnet sich dadurch aus, dass
- die zweite Drehachse zusammen mit der Basis entlang der ersten Drehachse verschiebbar ist,
- die Konstruktion des Pedals ein freies Zusammenspiel zwischen der Verschiebung der Basis entlang der ersten Drehachse und der Drehung der Fussauflage um die zweite Drehachse erlaubt,
- die Verschiebung der Basis entlang der ersten Drehachse in eine oder beide Verschiebungsrichtungen gefedert und/oder gedämpft ist,
- die Drehung der Fussauflage um die zweite Drehachse in eine oder beide Drehrichtungen gefedert und/oder gedämpft ist, und vorzugsweise
- die zweite Drehachse in Fahrtrichtung hinter der ersten Drehachse angeordnet ist und sich die Fussauflage von der zweiten Drehachse über die erste Drehachse erstreckt.

Es sei angemerkt, dass das erfindungsgemässe Pedal nicht nur für Trainingsgeräte, Rehabilitationsgeräte oder Sportgeräte geeignet ist, bei denen die kreisrunde Fahrrad-Bewegung abläuft, sondern auch für solche, die ein anderes Bewegungsmuster definieren. Das Pedal kann beispielsweise auf einem separaten Gerät wie einem Ski angebracht sein und / oder auf einem beweglichen Teil oder einem Unterbau eines Geräts (z.B. Schuhauflage einer Ruderbank, eines Steppers, eines Crosstrainers etc.). Allgemein kann der Mechanismus, der die Verschiebung entlang der ersten Drehachse erlaubt (insbesondere die Pedalachse oder die Führungsschienen) auf einer oder zwei einander gegenüberliegenden Seiten mit einem beweglichen Teil eines Trainingsgeräts verbunden sein. Mit dem beweglichen Teil ist vorzugsweise ein Teil gemeint, der dazu ausgebildet ist, während des Trainingsvorgangs mit einem Arm oder einem Bein eines Benutzers zusammenzuwirken bzw. durch diesen bewegt zu werden.

Entsprechend seien allgemein auch Trainings- und Sportgeräte mit einem erfindungsgemässen Pedal offenbart. Insbesondere ist dies ein Gerät, welches durch Beugen und Strecken der Beine und/oder Arme bedient und/ oder angetrieben wird und ein Pedal wie es beschrieben wurde aufweist, wobei es sich beim Gerät vorzugsweise um ein Therapiegerät, Rehabilitationsgerät, Fitnessgerät oder Fortbewegungsmittel und insbesondere um ein Fahrrad oder einen Ergometer handelt.

### Kurze Beschreibung der Zeichnungen

Es zeigen in schematischer, nicht massstabsgetreuer Darstellung:
- Fig.1: eine bevorzugte Ausführungsform eines erfindungsgemässen (rechten) Pedals in perspektivischer Darstellung;
- Fig. 2: eine Untersicht des Pedals aus Fig.1;
- Fig. 3: eine Seitenansicht des Pedals aus Fig.1;
- Fig. 4: eine weitere Ausgestaltungsvariante eines erfindungsgemässen (linken) Pedals in Seitenansicht;
- Fig. 5: eine zweite Seitenansicht des Pedals aus Fig.4;
- Fig. 6: eine Schnittdarstellung eines Pedals mit teleskopierbarer Pedalachse;
- Fig. 7: eine Ausführungsform des Pedales aufgesetzt auf ein anderes Gerät;
- Fig. 8: eine Darstellung der Bewegungsachsen der Hüfte;
- Fig. 9: eine Darstellung der Bein- bzw. Hüftbewegung beim Abspreizen und Anziehen (Abduktion/ Adduktion in der Hüfte);
- Fig.10: eine Darstellung der Bewegungsachsen von Knie und Fuss;
- Fig.11: eine Darstellung der positionsabhängigen kinematischen Zusammenhänge zwischen Tretkurbelarm, Pedal und Fussauflage in der Ansicht von vorn, entgegen der Fahrtrichtung; und
- Fig.12: eine Darstellung der virtuellen Drehachse im Fersenbereich in der Draufsicht.

### Ausführung der Erfindung

Die Erfindung wird nachfolgend anhand der Zeichnungen beispielhaft erläutert.

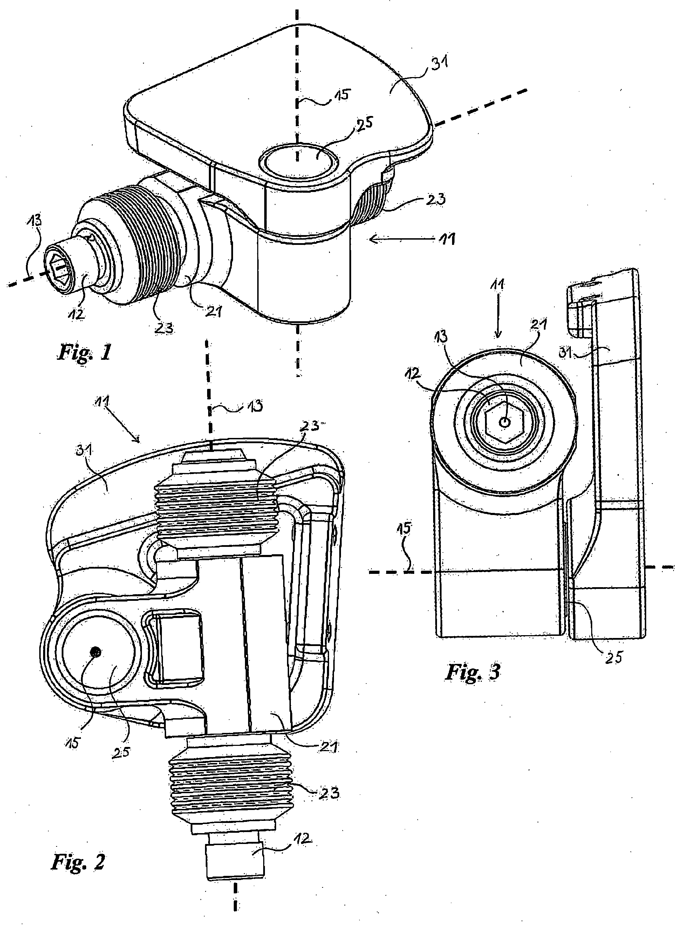

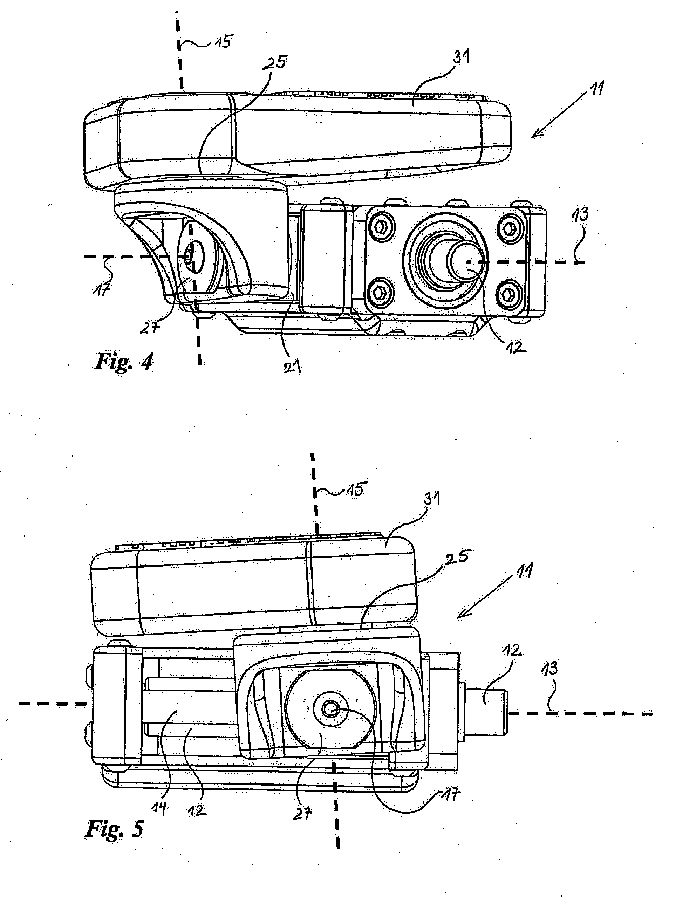

Die **Fig.1 bis 3** zeigen eine Variante des erfindungsgemässen Pedals in perspektivischer Darstellung, sowie eine Untersicht und eine Seitenansicht desselben. Das Pedal 11 kann an einem (nicht gezeigten) Tretkurbelarm eines Fahrrads, Trainings- oder Rehabilitationsgeräts befestigt werden. Es ist relativ zum Tretkurbelarm um die (erste) Drehachse 13 drehbar. Diese Drehbarkeit kann durch eine drehbare Verbindung zwischen der Pedalachse 12 und dem Tretkurbelarm erzielt werden. Die Pedalachse 12 kann jedoch auch drehfest mit dem Tretkurbelarm verbunden sein. In diesem Fall besteht die Möglichkeit, die Pedalachse 12 und die Basis 21 drehbar miteinander zu verbinden. Die Basis 21 stellt die Verbindung zwischen der Fussauflage 31 und der Pedalachse 12 bzw. demjenigen Teil des Pedals dar, der die Drehung um die erste Drehachse 13 ermöglicht. Dadurch ist eine in Fuss, Knie und Hüfte ausgeführte Beugung und Streckung (Flexion/Extension; d.h. Drehbewegungen um Achsen, die etwa parallel zur ersten Drehachse 13 ausgerichtet sind) ermöglicht. Die Basis 21 ist im vorliegenden Beispiel mit der Pedalachse 12 verbunden und vorzugsweise frei um diese drehbar. Ausserdem ist sie parallel zur Pedalachse 12 verschiebbar. Zu diesem Zweck kann die Basis 21 direkt mit der Pedalachse 12 verbunden sein, d.h. eine Aufnahme für die Pedalachse 12 bilden. In diesem Fall kann die Pedalachse 12 eine - oder die einzige - Führung für die Basis 21 bilden und das Gewicht des Fahrers aufnehmen. Es besteht jedoch auch die Möglichkeit, entlang der Pedalachse 12 bzw. entlang der ersten Drehachse 13 (insbesondere in Fahrtrichtung hinter und/oder vor der Pedalachse 12 bzw. der Drehachse 13) Führungsschienen 14 (vgl. Fig.4 und 5) vorzusehen, auf denen die Basis 21 entlang der Pedalachse 12 bzw. der Drehachse 13 verschoben werden kann und die das Gewicht des Fahrers aufnehmen. Die Verschiebung der Basis 21 entlang der Pedalachse 12 kann, wie gezeigt, gefedert und/ oder gedämpft sein und zwar mit Vorteil in beide Bewegungsrichtungen. Dies wird durch Federelemente 23 ermöglicht, bei denen es sich im vorliegenden Fall um Tonnenfedern handelt, die beidseitig der Basis 21 angeordnet und jeweils von einem Faltenbalg geschützt sind. Die Verbindung zwischen Basis 21 und Fussauflage 31 wird durch ein Gelenk 25 hergestellt, welches eine Drehung um die (zweite) Drehachse 15 erlaubt. Das Gelenk 25 ist im vorliegenden Fall als Federelement ausgebildet, welches zwei Anschläge aufweist, die die Drehung in beide Drehrichtungen und damit den Drehwinkel beschränken. Die Drehachse 15 ist (im Wesentlichen) rechtwinklig zur Pedalachse 12 und in Fahrtrichtung hinter dieser angeordnet. Damit wird eine Bewegung der Fussauflage 31 in einer zur Pedalachse 12 (im Wesentlichen) parallelen Ebene ermöglicht.

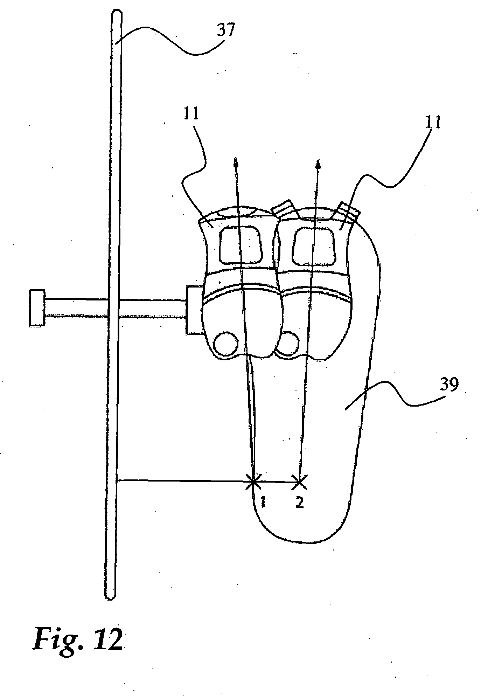

Durch die Verschiebbarkeit der Basis 21 entlang der Pedalachse 12, d.h. zum Tretkurbelarm hin und von diesem weg, erlaubt die Konstruktion ein Abspreizen und Anziehen (Abduktion/ Adduktion) des Unterschenkels relativ zum Oberschenkel und des Oberschenkels relativ zum Becken bzw. ein Abspreizen und Anziehen (Abduktion/Adduktion) des Fusses, sowie des Fusses, des Unterschenkels und des Oberschenkels gemeinsam relativ zum Becken.
Diese Bewegung kann bei verriegelter (steifer) Haltung der Fussgelenke und des Kniegelenks als eine Bewegung des Beines betrachtet werden, die über eine Drehung um eine im Hüftgelenk situierte sagittale Achse zz' (vgl. Fig. 8 und 9) erfolgt, welche etwa rechtwinklig zu den Drehachsen 15 und 13 ausgerichtet ist. Das nachfolgende Ausführungsbeispiel (Fig.4 und 5) fügt diesem Zusammenspiel der jeweiligen Beihgelenke noch die Möglichkeit einer nur vom Fuss ausgeführten Auf- und Abkantbewegung (Supination/Pronation) hinzu, ermöglicht durch eine (dritte) Drehachse 17 (vgl. unten). Durch die Drehbarkeit um die (etwa vertikale) zweite Drehachse 15 kann eine in Fuss, Knie und Hüfte ausgeführte Drehung nach innen und nach aussen (Innenrotation/ Außenrotation) erfolgen. Aus dem möglichen Zusammenwirken der Verschiebbarkeit der Basis 21 entlang der Pedalachse 12 mit der Drehbarkeit um die zweite (etwa) vertikale Drehachse 15 kann eine in Fuss, Knie und/ oder Hüfte ausgeführte Drehung nach innen bzw. nach aussen (Innenrotation / Aussenrotation) derart erfolgen, dass - bei horizontal hin-und herschwingendem Vorfuss - eine virtuelle, vertikale Drehachse im Fersenbereich des Fußes resultiert, die horizontal und in der Frontalebene, mit dem Anziehen und Abspreizen des Fußes respektive des Beines mitwandern kann. Die bei üblichen Pedalen bekannten Beuge-Streckbewegungen des Fusses respektive des Beines können somit kombiniert ausgeführt werden mit Innen - Aussenrotation sowie mit Abduktion-Adduktion und zwar mit physiologisch richtigen Achslagen und Achsbewegungen. Siehe Fig.12.

**Fig. 4 und 5** zeigen eine alternative Ausführungsvariante, bei der die Basis 21 über zwei Gelenke 25 und 27 mit der Fussauflage 31 verbunden ist. Die Gelenke 25,27 ermöglichen einerseits eine Drehung um die zweite Drehachse 15 wie oben beschrieben und andererseits eine Drehung um eine dritte Drehachse 17, welche (im Wesentlichen) rechtwinklig zur Pedalachse 12 und (im Wesentlichen) rechtwinklig zur zweiten Drehachse 15 ausgerichtet ist. Die genannte dritte Drehachse 17 bzw. das die Drehachse 17 definierende Gelenk 27 ermöglicht zusätzlich eine Auf- und Abkantbewegung des Fusses nach innen und aussen, d.h. eine Drehung um die Längsachse des Fusses (Supination/Pronation). Die Drehung um die dritte Drehachse 17 ist mit Vorteil ebenfalls in beide Drehrichtungen durch einen Anschlag beschränkt, so dass die Fussauflage 31 nicht mit der Pedalachse 12 und/oder der Basis 21 in Berührung kommt. Ausserdem ist es von Vorteil, wenn die Drehung um die dritte Drehachse 17 ebenfalls gefedert und/oder gedämpft ist. Die Gelenke 25,27 für die Drehung um die zweite Drehachse 15 und um die dritte Drehachse 17 können als elastische Elemente ausgebildet sein bzw. elastische Elemente enthalten, was eine sehr leichte Konstruktion des Pedals ermöglicht. Die Elemente können aus Kunststoff oder auch aus natürlichen elastischen Materialien gefertigt sein. Im Unterschied zum Pedal 11 aus den Fig.1 bis 3 ist die Ausführungsform aus Fig. 4 und 5 mit einer oder zwei zusätzlichen Führungsschienen 14 versehen, die (im Wesentlichen) parallel zur ersten Drehachse 13 bzw. zur Pedalachse 12 ausgerichtet sind. Dadurch kann das Gewicht des Fahrers besser aufgenommen werden. Die Führungsschienen 14 können jeweils an ihren Enden (direkt oder indirekt) mit der Pedalachse 12 (drehbar oder drehfest) verbunden sein, falls eine solche Pedalachse 12 wie im gezeigten Beispiel vorgesehen ist.

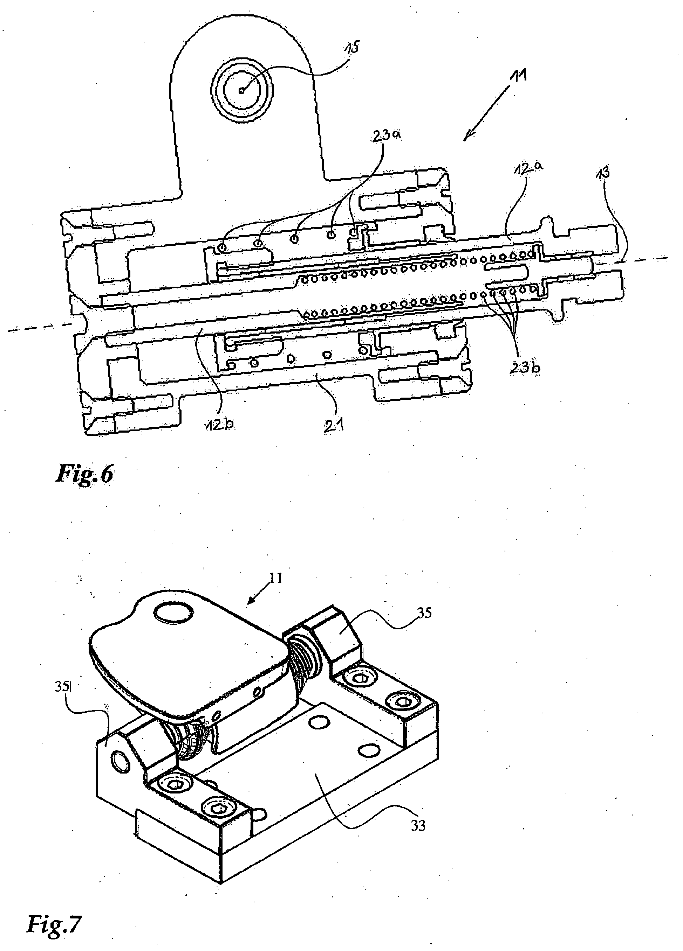

**Fig. 6** stellt eine Schnittdarstellung eines Pedals mit teleskopierbarer Pedalachse in Form einer Doppelachse dar. Zur Federung der Verschiebebewegung entlang der ersten Drehachse 13 wird hier eine aus einem äusseren und einem inneren Teil 12a und 12b gebildete Pedalachse eingesetzt. Die Teile 12a und 12b sind vorzugsweise zylindrisch, insbesondere kreiszylindrisch. Die Basis 21 bildet eine Aufnahme für den äusseren Teil 12a der Pedalachse, wobei ein Teil der Aufnahme einen Innendurchmesser aufweist, der dem Aussendurchmesser des äusseren Teils 12a der Pedalachse entspricht. Ein weiterer Teil der Aufnahme weist einen Innendurchmesser auf, der grösser als der genannte Aussendurchmesser des äusseren Teils der Pedalachse 12a ist, wodurch ein Freiraum gebildet wird, in den ein Federelement 23a aufgenommen ist. Der äussere Teil der Pedalachse 12a ist hohl, und in diesen aufgenommen ist ein innerer Teil der Pedalachse 12b. Die beiden Pedalachsenteile 12a und 12b fluchten, wobei der innere Teil 12b in den äussern Teil 12a hineingleiten kann. Das Hineingleiten ist durch ein Federelement 23b, welches ebenfalls in den äusseren Teil 12a der Pedalachse aufgenommen ist, gefedert bzw. gedämpft. Bei den Federelementen 23a und 23b handelt es sich hier um Schraubenfedern. Diese Ausgestaltungsform ist besonders platzsparend. Es sind auch andere Ausführungsvarianten desselben Konstruktionsprinzips denkbar. Von Interesse sind allgemein Pedale, die eine längenveränderliche oder teleskopierbare Pedalachse aufweisen und/ oder Pedale mit einer Pedalachse, die zwei ineinandergleitende (vorzugsweise zylindrische) Teile aufweist. Weiterhin von Interesse sind Pedale, die zwei aneinander vorbei bewegbare Federelemente aufweisen. In letzterem Fall ist das eine Federelement vorzugsweise durch das andere Federelement hindurchbewegbar oder in das andere Federelement hineinbewegbar und/oder es ist ganz oder teilweise im anderen Federelement angeordnet.

**Fig.7** zeigt eine alternative Anbindung eines Pedals 11 für andere Geräte als Fahrräder. Das Pedal 11 ist im gezeigten Beispiel auf einem Sockel 33 montiert, der an bzw. auf einem Gerät angebracht oder durch das Gerät gebildet sein kann. Dieser weist ein oder zwei Gelenke 35 zur (um die erste Drehachse) drehbaren Verbindung mit dem Pedal 11 bzw. der Pedal-Basis auf. Bei Vorhandensein einer Pedalachse kann es sich bei den Gelenken 35 um einfache Achsenaufnahmen für die Pedalachse handeln. Eine solche Konstruktion kann beispielsweise genutzt werden, um die Funktionalität des Pedals auch mit anderen Geräten als Fahrrädern zu verbinden bzw. auf diese zu übertragen.

**Fig. 8** zeigt die Bewegungsachsen des Hüftgelenks. Um die Achse xx' erfolgen Beugung und Streckung des Beines in der Hüfte, um die Achse yy' erfolgen Innen- und Aussendrehung des Beines in der Hüfte und um die Achse zz' erfolgen Abspreizen und Anziehen des Beines in der Hüfte. Die gestrichelte Linie von O nach R markiert die Längsachse des Beines mit dem Drehzeritrum O.

**Fig. 9** zeigt - unter Bezugnahme auf die Achsenbezeichnung aus Fig.8 - die Bewegungsausführung um die Achse zz' des Beines in der Hüfte. Die schwach gestrichelte Linie markiert die Längsachse des Beines; die stärker gestrichelte Linie zeigt die Längsachse des Oberschenkels. In der Darstellung steht das Bein in abgespreizter Ausgangsposition (nach außen). Der Pfeil zeigt auf die Endposition des Beines nachdem es angezogen wurde (nach innen). Diese Abbildung zeigt besonders deutlich die innovative Bewegungsfunktion des Pedals bezogen auf die natürliche Hüftbewegung des Menschen. Der Fuss kann dabei zum einen die Bewegung in der Hüfte in der Achse zz' ausführen bzw. ihr folgen, zum anderen kann der Fuss in jeder Hüftposition alle eigenen Bewegungen ausführen: Die Beugung und Streckung des Fusses um die Achse xx', die Innen - und Aussendrehung um die Achse yy' sowie die dem Fuss eigenen Bewegungen um die Achse zz', die Aufkantbewegung (Heben des inneren Fussrandes nach oben) und die Abkantbewegung (Senken des inneren Fussrandes durch Heben des äußeren Fussrandes nach oben). Diese Bewegungsspiel im Fuss um die Achse zz' wird auch als Supination -Pronation bezeichnet.

**Fig.10** zeigt die Bewegungsachsen des Knie- und des Fussgelenks. Um die Achsen xx' erfolgen Beugung und Streckung des Knies und des Fusses. Um die Achse yy' erfolgen Innen- und Aussendrehung des Knies und des Fusses. Für das Knie erfolgt um die Achse zz' ein geringfügiges, aber biomechanisch sinnvolles Abspreizen des Unterschenkels relativ zum Oberschenkel und ein Anziehen des Unterschenkels relativ zum Oberschenkel. Dieser funktionelle Bewegungsmodus im Knie um die Achse zz', der naturgemäss an das Beugen und Strecken um die Achse xx' in Hüfte und Knie gekoppelt ist, wird auch als Valgisierung - Varisierung bezeichnet.
Für den Fuss erfolgt um die Achse zz' die bereits oben geschilderte Supination-Pronationsbewegung.
Zur Vereinfachung der Darstellung der Bewegungsachsen des Fusses, der anatomisch aus 2 Gelenken besteht; dem oberen Sprunggelenk, das die Achse xx' realisiert und dem unteren Sprunggelenk, das die Achse zz' realisiert, sind die anatomisch gelenkmässig getrennten Achsen xx' und zz' hier - zeichnerisch vereinfacht - in einem Gelenk dargestellt. Auch der anatomisch korrekte Verlauf der Achse zz' des Fusses, der anatomisch schräg verläuft (für den rechten Fuss; von oben innen nach unten aussen verläuft), ist zur Vereinfachung zeichnerisch gerade im Längsverlauf des Fusses dargestellt.

**Fig.11** zeigt das Zusammenspiel von Beinstellung und Pedalposition beim Einsatz des (rechten) Pedals 11 in einer Ansicht von vorn entgegen der Fahrtrichtung. In der oberen Bildreihe links wird gezeigt, dass das Pedal 11 nach innen positioniert ist, also zum Tretkurbelarm 37 hin, wenn sich der Tretkurbelarm 37 in einer oberen Stellung befindet. In der oberen Bildreihe rechts wird gezeigt, dass diese Pedalposition einer Stellung entspricht, bei der Hüfte und Knie gebeugt und angezogen sind. (Die einwärts gedrehte Stellung von Hüfte und Knie in dieser Position ist nicht sichtbar). Diese Pedalposition entspricht einer Stellung, bei der der Fuss angezogen ist. (Die Aufkant-Position des inneren Fussrandes (Supination) in dieser Position, ist nicht dargestellt).
In der unteren Bildreihe links wird gezeigt, dass das Pedal 11 nach aussen positioniert ist, also vom Tretkurbelarm 37 weg, wenn sich der Tretkurbelarm 37 in einer unteren Stellung befindet. In der unteren Bildreihe rechts wird gezeigt, dass diese Pedalposition einer Stellung, entspricht bei der Hüfte und Knie gestreckt und abgespreizt sind. (Die auswärts gedrehte Stellung von Hüfte und Knie in dieser Position, ist nicht sichtbar). Diese Pedalposition entspricht einer Stellung, bei der der Fuss abgespreizt ist. (Die Abkant-Position des inneren Fussrandes (Pronation) in dieser Position, ist nicht dargestellt).

**Fig.12** zeigt ein (rechtes) Pedal 11 in zwei verschiedenen Positionen, wobei in der einen Position ein auf das Pedal 11 aufgesetzter Fuss 39 gezeichnet ist. Die Abbildung stellt eine Ansicht von oben dar und markiert in Form von Pfeilen die Fusslängsachse in den beiden genannten Positionen. Beispielhaft sind die virtuellen Drehachsen x1 und x2 in Draufsicht gezeichnet, die der anatomischen Beinachse yy' (vgl. Fig.8) entsprechen und die funktionell im Fersenbereich des Fusses eines Pedälnutzers resultieren, ohne als technische Hardware vorhanden zu sein. Mit der Fussauflage verschiebt sich auch die Lage der virtuellen Drehachse entlang einer frontalen Achse in der Frontalebene. Dies ist das Resultat einer kombinierten Bewegung, die sich aus einer Drehbewegung des Beines um die Achse yy' (Einwärts-Auswärtsdrehen; ermöglicht durch ein Drehung der Fussauflage um die zweite Drehachse) und einer Bewegung des Beines um die Achse zz' (Anziehen -Abspreizen; ermöglicht durch die Verschiebung der Fussauflage respektive der zweiten Drehachse entlang der ersten Drehachse) zusammensetzt. Die virtuelle Drehachse verändert ihre Lage also abhängig von der jeweiligen Pedalposition in verschiedene Sagittalebenen hinein. Ausgelöst durch kombinierte Bewegungen in den beteiligten Gelenken, die das Pedal in eine biomechanisch bedarfsgerechte Position bringen, wandert sie mit. Daraus resultiert ein sich abhängig von der Pedalposition ändernder Abstand der virtuellen Drehachsen x1 bzw. x2 zum Tretkurbelarm 37. Die Fusslängsachse, dargestellt als Pfeil 1 bzw. Pfeil 2, verändert ihren Abstand zum Tretkurbelarm 37 dementsprechend analog. Die Darstellung zeigt, dass die eine Fusslängsachse (Pfeil 1) und deren virtuelle Drehachse x1 näher am Tretkurbelarm 37 liegen, als die andere Fusslängsachse (Pfeil 2) und deren virtuelle Drehachse x2. Die Position von Pfeil 1 entspricht dabei der Pedal-Fuss- Position (oben, innen) bei gebeugtem Bein, also bei nach oben zeigendem Tretkurbelarm 37 (vgl. Fig.11). Die Position von Pfeil 2 entspricht der Pedal-Fuss- Position (unten, außen) bei gestrecktem Bein, also bei nach unten zeigendem Tretkurbelarm.

### Bezugszeichenliste:

- x1: virtuelle Drehachse im Fersenbereich
- x2: virtuelle Drehachse im Fersenbereich
- 11: Pedal
- 12: Pedalachse (physische Achse)
- 12a: Äusserer Teil einer teleskopierbaren Pedalachse
- 12b: Innerer Teil einer teleskopierbaren Pedalachse
- 13: Erste Drehachse
- 14: Führungsschiene
- 15: Zweite Drehachse
- 17: Dritte Drehachse
- 21: Basis
- 23: Federelement (Verschiebung; entlang Pedalachse)
- 23a: Äussere Schraubenfeder
- 23b: Innere Schraubenfeder
- 25: Federelement bzw. Gelenk (Drehung; zweite Drehachse)
- 27: Federelement bzw. Gelenk (Drehung; dritte Drehachse)
- 31: Fussauflage
- 33: Sockel
- 35: Gelenke / Achsenaufnahmen
- 37: Tretkurbelarm
- 39: Fuss

## Patentansprüche

1. Pedal mit einer ersten Drehachse (13), einer Basis (21), und einer Fussauflage (31), **dadurch gekennzeichnet, dass**
- die Basis (21) und die Fussauflage (31) um die erste Drehachse (13) drehbar und entlang der ersten Drehachse (13) verschiebbar sind
- die Basis parallel oder im Wesentlichen parallel zur ersten Drehachse verschiebbar ist, wobei es sich bei der Verschiebung um eine freie Bewegung handelt, **dadurch gekennzeichnet, dass**
- die Verschiebung der Basis (21) entlang der ersten Drehachse (13) in beide Verschiebungsrichtungen gefedert und/oder gedämpft ist.

2. Pedal nach Anspruch 1, **dadurch gekennzeichnet, dass** die Basis um mindestens, 3 oder 5 Zentimeter entlang der ersten Drehachse verschiebbar ist.

3. Pedal nach einem der Ansprüche 1 oder 2, **dadurch gekennzeichnet, dass** die Federung durch zwei oder mehr Federelemente und/oder die Dämpfung durch zwei oder mehr Dämpfungselemente erreicht wird, wobei die Federelemente und/oder Dämpfungselemente beidseitig der Basis im Bereich der ersten Drehachse angeordnet sind.

4. Pedal nach einem der Ansprüche 1 oder 2, **dadurch gekennzeichnet, dass** die Federung durch ein oder mehr Federelemente und/oder die Dämpfung durch ein oder mehr Dämpfungselemente erreicht wird, wobei das Feder- oder Dämpfungselement in zwei einander entgegengesetzte Verschiebungsrichtungen, insbesondere auf Zug und auf Druck, beanspruchbar ist und seine Feder- oder Dämpfungswirkung entfaltet.

5. Pedal nach einem der Ansprüche 1 bis 4, **dadurch gekennzeichnet, dass** die Federung und/oder Dämpfung durch elastisch verformbare Elemente (25) aus Polymer, insbesondere Kautschuk, erreicht wird.

6. Pedal nach einem der Ansprüche 1 bis 4, **dadurch gekennzeichnet, dass** die Federung und/oder Dämpfung durch Schraubenfedern, Tonnenfedern oder Spiralfedern erreicht wird.

7. Pedal nach einem der Ansprüche 1 bis 6, **dadurch gekennzeichnet, dass**
- die Fussauflage (31) um eine zweite Drehachse (15) drehbar mit der Basis (21) verbunden ist, wobei
- die zweite Drehachse (15) quer zur ersten Drehachse (13) angeordnet ist und
- die zweite Drehachse (15) zusammen mit der Basis (21) entlang der ersten Drehachse (13) verschiebbar ist.

8. Pedal nach Anspruch 7, **dadurch gekennzeichnet, dass**
- die zweite Drehachse (15) in Fahrtrichtung hinter oder vor der ersten Drehachse (13) angeordnet ist und
- die Fussauflage (31) sich von der zweiten Drehachse (15) über die erste Drehachse (13) erstreckt.

9. Pedal nach Anspruch 7, **dadurch gekennzeichnet, dass** die zweite Drehachse (15) von oben nach unten durch die Fussauflage (31) verläuft und (15) die erste Drehachse (13) schneidet.

10. Pedal nach einem der Ansprüche 7 bis 9, **dadurch gekennzeichnet, dass** die Konstruktion des Pedals (11) ein freies Zusammenspiel zwischen der Drehung der Basis (21) um die erste Drehachse (13), der Verschiebung der Basis (21) entlang der ersten Drehachse (13) und der Drehung der Fussauflage (31) um die zweiten Drehachse (15) erlaubt.

11. Pedal nach einem der Ansprüche 7 oder 10, **dadurch gekennzeichnet, dass** die Drehung der Fussauflage (31) um die zweite Drehachse (15) in eine oder beide Drehrichtungen gefedert und/oder gedämpft ist.

12. Pedal nach Anspruch 11, **dadurch gekennzeichnet, dass** die Federung und/oder Dämpfung durch elastisch verformbare Elemente (25) aus Polymer, insbesondere Kautschuk, erreicht wird.

13. Pedal nach einem der Ansprüche 7 bis 12, **dadurch gekennzeichnet, dass** die Fussauflage (31) um eine dritte Drehachse (17) drehbar mit der Basis (21) verbunden ist, wobei die dritte Drehachse (17) quer zur ersten Drehachse (13) und quer zur zweiten Drehachse (15) angeordnet ist und wobei die Drehung um die dritte Drehachse (17) vorzugsweise in eine oder beide Drehrichtungen gefedert und/oder gedämpft ist.

14. Pedal nach einem der Ansprüche 1, 2 oder 4 bis 13, **dadurch gekennzeichnet, dass** die erste Drehachse (13) durch eine Pedalachse (12) gebildet ist und dass es sich bei der Pedalachse (12) um eine teleskopierbare Achse handelt.

15. Pedal nach einem der Ansprüche 1 bis 13, **dadurch gekennzeichnet, dass** das Pedal eine Pedalachse (12) aufweist und die erste Drehachse (13) durch die Pedalachse (12) definiert ist, wobei die Pedalachse (12) und die Basis (21) drehbar miteinander verbunden sind und die Basis (21) entlang der Pedalachse (12) verschiebbar ist, wodurch die Basis (21) und die Fussauflage (31) um die erste Drehachse (13) drehbar und entlang der ersten Drehachse (13) verschiebbar sind.

16. Gerät mit einem Pedal nach einem der Ansprüche 1 bis 15, insbesondere Trainingsgerät, Rehabilitationsgerät oder Sportgerät.

## Claims

1. Pedal with a first axis of rotation (13), a base (21) and a footrest (31), **characterized in that**
- the base (21) and the footrest (31) are rotatable about the first axis of rotation (13) and displaceable along the first axis of rotation (13),
- the base is displaceable parallel to or substantially parallel to the first axis of rotation, whereby the matter is, for the displacement, of a free movement, **characterized in that**
- the displacement of the base (21) is elastically attenuated and/or damped along the first axis of rotation (13) in both displacement directions.

2. Pedal according to claim 1, **characterized in that** the base is displaceable about at least 2, 3 or 5 centimeters along the first axis of rotation.

3. Pedal according to one of the claims 1 or 2, **characterized in that** the elastic attenuation is achieved by two or more spring elements and/or the damping by two or more damping elements, whereby the spring elements and/or damping elements are placed on both sides of the base in the area of the first axis of rotation.

4. Pedal according to one of the claims 1 or 2, **characterized in that** the elastic attenuation is achieved by one or more spring elements and/or the damping by one or more damping elements, whereby the spring or damping element can be stressed, in particular by tension or pressure, and develops its elastic attenuation or dampening effect in two opposite displacement directions.

5. Pedal according to one of the claims 1 to 4, **characterized in that** the elastic attenuation and/or dampening is achieved by elastically deformable elements (25) made of polymer, in particular of rubber.

6. Pedal according to one of the claims 1 to 4, **characterized in that** the elastic attenuation and/or dampening is achieved by helical springs, barrel springs or spiral springs.

7. Pedal according to one of the claims 1 to 4, **characterized in that**
- the footrest (31) is rotatably connected to the base (21) about a second axis of rotation (15), whereby
- the second axis of rotation (15) is placed transversely to the first axis of rotation (13) and
- the second axis of rotation (15) is displaceable together with the base (21) along the first axis of rotation (13).

8. Pedal according to claim 7, **characterized in that**
- the second axis of rotation (15) is placed in the direction of travel behind or in front of the first axis of rotation (13) and
- the footrest (31) extends from the second axis of rotation (15) over the first axis of rotation (13).

9. Pedal according to claim 7, **characterized in that** the second axis of rotation (15) runs from top to bottom through the footrest (31) and intersects the first axis of rotation (13).

10. Pedal according to one of the claims 7 to 9, **characterized in that** the construction of the pedal (11) allows a free interaction between the rotation of the base (21) about the first axis of rotation (13), the displacement of the base (21) along the first axis of rotation (13) and the rotation of the footrest (31) about the second axis of rotation (15).

11. Pedal according to one of the claims 7 or 10, **characterized in that** the rotation of the footrest (31) about the second axis of rotation (15) is elastically attenuated and/or damped in one or in both rotational directions.

12. Pedal according to claim 11, **characterized in that** the elastic attenuation and/or dampening is achieved by elastically deformable elements (25) made of polymer, in particular of rubber.

13. Pedal according to one of the claims 7 to 12, **characterized in that** the footrest (31) is rotatably connected to the base (21) about a third axis of rotation (17), whereby the third axis of rotation (17) is placed transversely to the first axis of rotation (13) and transversely to the second axis of rotation (15) and whereby the rotation about the third axis of rotation is elastically attenuated and /or damped in one or in both rotational directions.

14. Pedal according to one of the claims 1, 2 or 4 to 13, **characterized in that** the first axis of rotation (13) is formed by a pedal axis (12) and that the matter is, for the pedal axis (12), of a telescopic axis.

15. Pedal according to one of the claims 1 to 13, **characterized in that** the pedal has a pedal axis (12) and the first axis of rotation (13) is defined by the pedal axis (12), whereby the pedal axis (12) and the base (21) are rotatably connected to each other and the base (21) is displaceable along the pedal axis (12) so that the base (21) and the footrest (31) are rotatable about the first axis of rotation (13) and displaceable along the first axis of rotation (13).

16. Device with a pedal according to one of the claims 1 to 15, in particular training device, rehabilitation device or sports device.

## Revendications

1. Pédale avec un premier axe de rotation (13), une base (21) et un repose-pied (31), **caractérisée en ce que**
- la base (21) et le repose-pied (31) sont rotatifs autour du premier axe de rotation (13) et déplaçables le long du premier axe de rotation (13),
- la base est déplaçable parallèlement ou substantiellement parallèlement au premier axe de rotation, cependant qu'il s'agit, pour le déplacement, d'un mouvement libre, **caractérisé en ce que**
- le déplacement de la base (21) le long du premier axe de rotation (13) est atténué de manière élastique et/ou amorti dans les deux directions de déplacement.

2. Pédale selon la revendication 1, **caractérisée en ce que** la base est déplaçable d'au moins 2, 3 ou 3 centimètres le long du premier axe de rotation.

3. Pédale selon l'une des revendications 1 ou 2, **caractérisée en ce que** l'atténuation élastique est obtenue par deux ou plusieurs éléments à ressort et/ou l'amortissement est obtenu par deux ou plusieurs éléments d'amortissement, cependant que les éléments à ressort et/ou les éléments d'amortissement sont placés des deux côtés de la base dans la zone du premier axe de rotation.

4. Pédale selon l'une des revendications 1 ou 2, **caractérisée en ce que** l'atténuation élastique est obtenue par un ou plusieurs éléments à ressort et/ou l'amortissement est obtenu par un ou plusieurs éléments d'amortissement, cependant que l'élément à ressort ou l'élément d'amortissement peut être sollicité, en particulier en traction et en pression, et qu'il déploie son effet de ressort et/ou d'amortissement dans deux directions de déplacement opposées l'une à l'autre.

5. Pédale selon l'une des revendications 1 à 4, **caractérisée en ce que** l'atténuation élastique et/ou l'amortissement est obtenu par des éléments déformables élastiquement (25) en polymère, en particulier en caoutchouc.

6. Pédale selon l'une des revendications 1 à 4, **caractérisée en ce que** l'atténuation élastique et/ou l'amortissement est obtenu par des ressorts hélicoïdaux, des ressorts tonneaux ou des ressorts spiralés.

7. Pédale selon l'une des revendications 1 à 6, **caractérisée en ce que**
- le repose-pied (31) est relié à la base (21) en étant rotatif autour d'un second axe de rotation (15), cependant que
- le second axe de rotation (15) est placé transversalement par rapport au premier axe de rotation (13) et
- le second axe de rotation (15) est déplaçable avec la base (21) le long du premier axe de rotation (13).

8. Pédale selon la revendication 7, **caractérisée en ce que**
- le second axe de rotation (15) est placé dans le sens de la marche derrière ou devant le premier axe de rotation (13) et
- le repose-pied (31) s'étend du second axe de rotation (15) sur le premier axe de rotation (13).

9. Pédale selon la revendication 7, **caractérisée en ce que** le second axe de rotation (15) passe de haut en bas par le repose-pied (31) et (15) coupe le premier axe de rotation (13).

10. Pédale selon l'une des revendications 7 à 9, **caractérisée en ce que** la construction de la pédale (11) permet un jeu libre entre la rotation de la base (21) autour du premier axe de rotation (13), le déplacement de la base (21) le long du premier axe de rotation (13) et la rotation du repose-pied (31) autour du second axe de rotation (15).

11. Pédale selon l'une des revendications 7 ou 10, **caractérisée en ce que** la rotation du repose-pied (31) autour du second axe de rotation (15) est atténuée par des ressorts et/ou amortie dans un ou dans les deux sens de rotation.

12. Pédale selon la revendication 11, **caractérisée en ce que** l'atténuation élastique et/ou l'amortissement est obtenu par des éléments déformables élastiquement (25) en polymère, en particulier en caoutchouc.

13. Pédale selon l'une des revendications 7 à 12, **caractérisée en ce que** le repose-pied (31) est relié à la base (21) en étant rotatif autour d'un troisième axe de rotation (17), cependant que le troisième axe de rotation (17) est placé transversalement par rapport au premier axe de rotation (13) et transversalement par rapport au second axe de rotation (15) et cependant que la rotation autour du troisième axe de rotation (17) est atténuée élastiquement et/ou amortie de préférence dans un ou dans les deux sens de rotation.

14. Pédale selon l'une des revendications 1, 2 ou 4 à 13, **caractérisée en ce que** le premier axe de rotation (13) est formé par un axe de pédale (12) et qu'il s'agit, pour l'axe de pédale (12), d'un axe télescopique.

15. Pédale selon l'une des revendications 1 à 13, **caractérisée en ce que** la pédale présente un axe de pédale (12) et le premier axe de rotation (13) est défini par l'axe de pédale (12), cependant que l'axe de pédale (12) et la base (21) sont reliés de manière rotative l'un à l'autre et la base (21) est déplaçable le long de l'axe de pédale (12) si bien que la base (21) et le repose-pied (31) sont rotatifs autour du premier axe de rotation (13) et sont déplaçables le long du premier axe de rotation (13).

16. Appareil avec une pédale selon l'une des revendications 1 à 15, en particulier appareil d'entraînement, appareil de réhabilitation ou appareil de sport.
